# EUROPEAN PATENT SPECIFICATION

(11) **EP 3 716 356 B1**
(45) Date of publication and mention of the grant of the patent: **01.01.2025**
(21) Application number: 20166892.8
(22) Date of filing: 30.03.2020
(51) Int. Cl.: H01M 10/643

(54) **CELL HOLDER FOR CYLINDRICAL CELLS**
ZELLHALTER FÜR ZYLINDRISCHE ZELLEN
PORTE-CELLULE POUR CELLULES CYLINDRIQUES

(30) Priority: 29.03.2019 PL 12813519
(43) Date of publication of application: 30.09.2020
(73) Proprietor: Wacker Neuson Produktion GmbH & Co. KG, 85084 Reichertshofen (DE)
(72) Inventor: Paliwoda, Jacek, 05-500 Jozefoslaw (PL); Zreda, Jakub, 05-500 Jozefoslaw (PL)
(74) Representative: AOMB Polska Sp. z.o.o.

(56) References cited:
- DE-A1- 102007 021 293
- US-A1- 2016 149 175

## Description

The object of the invention is a plastic element intended for placing cells inside it, e.g. batteries, accumulators, having additional fragments for sealing and stabilizing the cells.

In the prior art, various types of cell holders are known, in which a group of cylindrical cells can be placed. Such integrated cell systems are often used e.g. as car batteries etc. Holders for this type of cell systems must meet a number of technical requirements, which include a need for stable holding of the cells in place, without the possibility of uncontrolled movement, ensuring the tightness of the cell faces while allowing the flow of refrigerant at the side surfaces of the cells, as well as a necessity to adapt the holder to cells so that it can cooperate with numerous cells, which cells, due to the imperfections of the production process, may vary slightly in dimensions. At the same time, the holder must ensure that electrical connections can be made to the cells. The reconciliation of the aforementioned conditions is a challenge when developing this type of cell holder.

An example of the solution to meet the above-mentioned technical challenges is the cell holder known from the patent EP1990849B1, which has numerous cylindrical channels made of one plastic, for placing cells therein, where a gasket made of flexible material is introduced near the front surfaces of the cells, or more precisely, near the upper and lower edges of the cells. Unfortunately, although the insertion of the gasket into the edge area of the cell edges allows for some compensation of slacks, with cells slightly differing from each other, it does not guarantee water- and dust-tightness at the required level. Document US 2016149175 discloses a cell holder with cylindrical through-holes. An adhesive is used to secure the cells in the holes.

The necessary tightness, both in terms of dust and moisture, as well as compensation of slack and - as a result - stable holding of the cell in the holder, is ensured by the design of the cell holder according to the present invention.

The cell holder according to the invention, has the form of a plate, in which there are provided cylindrical cavities for cells, ending with a bottom wherein the bottom has a through hole, shifted from the side wall of the cavity, while from the side of the cavity the bottom is at least partially covered with a soft gasket, wherein the gasket is integrated with and permanently connected to the cell holder, and wherein the thickness of the gasket near the side wall of the cavity is greater than the thickness of the gasket near the through hole.

Preferably, there are additional sealing lips on the surface of the gasket, especially one, two or three sealing lips, which lips are part of this gasket.

Preferably, in the area of the side wall of the cavity, especially at the edge of the cavity distant from the bottom, there are additional protrusions, integrated with the material of the and permanently connected to it, wherein these protrusions are made of the same soft material as the gasket.

Preferably, the corner of the gasket is concavely rounded.

**The subject of the invention in an embodiment is further illustrated with reference to the drawing, in which:**
Fig. 1 is a cross-sectional view of a set in which there are two cell holders assembled and having cells inserted
Fig. 2 shows a view of detail A of Fig. 1 with a gasket according to one embodiment of the invention visible
Fig. 3 shows a top view of the cell holder, and
Fig. 4 shows a view of detail of B Fig. 3 with a top view of a cavity for receiving a cell.

Designations used in the drawing:
1 - battery space
2 - cell
3 - cell holder
4 - hard material of the cell holder
5 - soft material of the cell holder
6 - cell cavity (cavity for a cell) in the cell holder
7 - soft plastic protrusions for clearing slack
8 - corner of the gasket
9 - gasket surface
10 - sealing lip

The cell holder 3 according to the invention is made of plastic and has a form similar to a plate in which there are cavities 6 for cells 2, which cavities 6 are terminated with through holes through the remaining thickness of the plate.

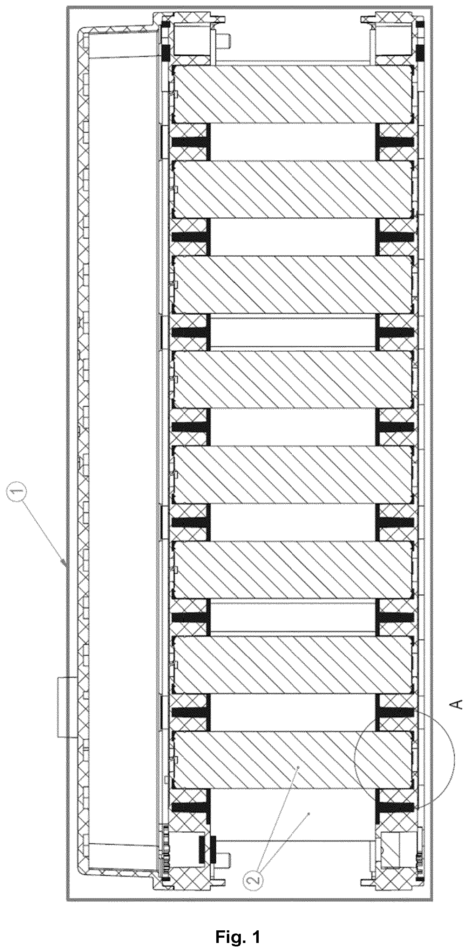

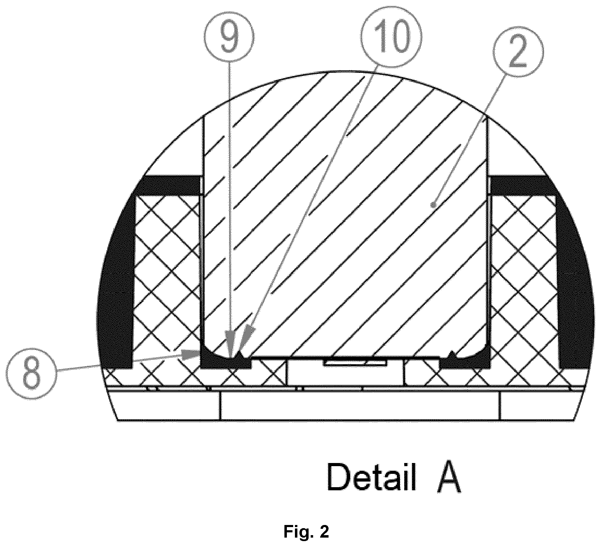

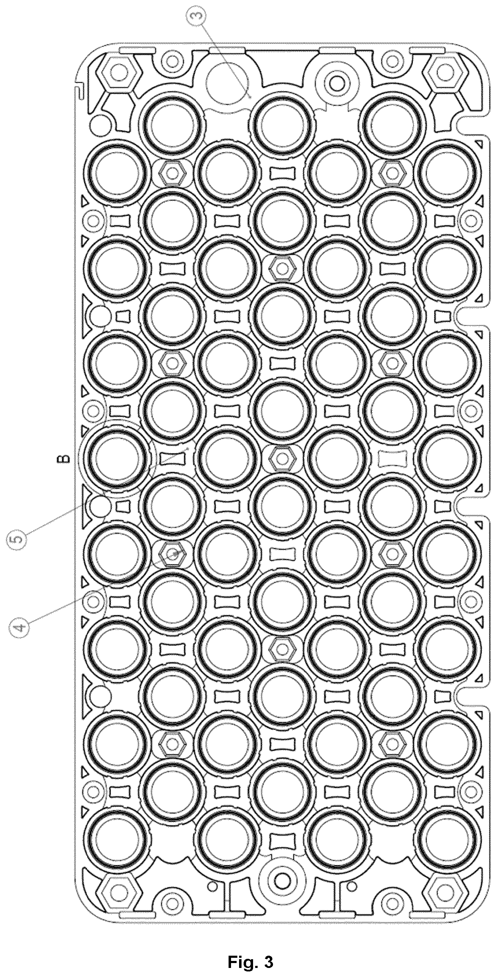

The cavities 6 for the cells have a cylindrical shape and within a single cell holder 3 - have the same depth and the same diameter, as can be seen in Fig. 1 and Fig. 2. In one cell holder 3 there are many cavities 6, in the number appropriate for the given application, wherein the cavities are arranged in rows relative to each other, e.g. in alternating rows of four and three cavities, as can be seen in Fig. 3.

In the cell cavity 6 for the cell 2 there is a gasket, which is made of a soft material 5 and is present in the area of the bottom of the cavity 6 and between the through hole and the side wall of the cavity 6, as seen in Fig. 2. Such a gasket is located around the bottom of the cavity 6, in a ring-shaped manner. The thickness of the gasket is not constant and it increases as it approaches the side wall of the cavity, as can be seen in Fig. 2, creating a rounding of a corner 8 of the gasket, which rounding is an additional means to eliminate slack and stabilize the cell 2 in the cell cavity 6.

The gasket can be further modified by forming one, two or three sealing lips 10 on gasket surface 9 or in the corner area 8 of the gasket. Such sealing lips 10, made of the same soft material 5 as the gasket material, are deformed under the influence of the cell 2 located in the cell cavity 6, additionally increasing the tightness of the cell-gasket abutment.

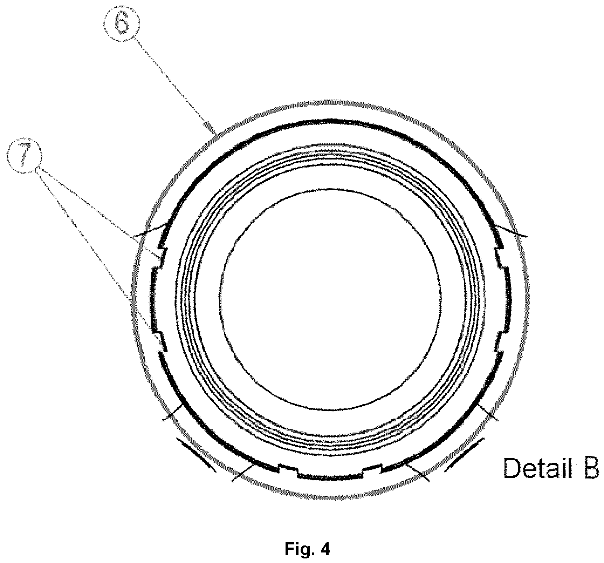

Each cell cavity 6 for the cell 2 may have additional protrusions 7 present in the side wall area of the cell cavity 6, especially at the edge of the cell cavity 6, which are made of the soft material 5 and which, thanks to the ability of deformation, serve to eliminate slacks when a cell 2 is inserted into the cavity 6, which cell 2 has a slightly different diameter than the diameter of the hole in the cell cavity 6, as shown in Fig. 4.

Although it would be possible to use appropriately shaped gaskets (O-rings) inserted into the cell cavity 6, this would unnecessarily complicate the production process of the entire set (two cell holders and numerous cells, assembled into one energy storage device).

The gaskets in the cell holder 3 and optionally the protrusions 7 in the region of the sidewall of the cell cavity 6 according to the invention are produced together with the cell holder during a multi-component injection process, wherein the cell holder is made of a hard material 4, while the gaskets and possibly the protrusions 7 are made of a soft material 5, e.g. made of TPE (thermoplastic polyester elastomer) or TPU (thermoplastic polyurethane elastomer).

The cell holder according to the invention, in the cavities of which there are integrated and permanently connected gaskets, ensures dustproof and waterproof, as well as guarantees slacks-free holding of the cells in the holder. Electrical connections of the cells are possible by through holes in the bottom of the cavities.

## Claims

1. A cell holder (3), having form of a plate, in which there are provided cylindrical cavities (6) for cells (2), ending with a bottom, wherein the bottom has a through hole, shifted from the side wall of the cavity (6), while from the side of the cavity (6) the bottom is at least partially covered with a soft gasket, wherein the gasket is integrated with and permanently connected to the cell holder (3), and wherein the thickness of the gasket near the side wall of the cavity (6) is greater than the thickness of the gasket near the through hole.

2. The cell holder (3) according to claim 1, **characterised in that** there are additional sealing lips (10) on the surface of the gasket, especially one, two or three sealing lips (10), which lips (10) are part of this gasket.

3. The cell holder (3) according to claim 1, **characterised in that** in the area of the side wall of the cavity (6), especially at the edge of the cavity (6) distant from the bottom, there are additional protrusions, integrated with the material of the cell holder (3) and permanently connected to it, wherein these protrusions are made of the same soft material (5) as the gasket.

4. The cell holder (3) according to claim 1, **characterised in that** the corner (8) of the gasket is concavely rounded.

## Patentansprüche

1. Ein Zellenhalter (3) in Form einer Platte, in der zylindrische Hohlräume (6) für Zellen (2) vorgesehen sind, die mit einem Boden enden, wobei der Boden ein Durchgangsloch hat, das von der Seitenwand des Hohlraums (6) versetzt ist, während der Boden von der Seite des Hohlraums (6) zumindest teilweise mit einer weichen Dichtung bedeckt ist, wobei die Dichtung in den Zellenhalter (3) integriert und dauerhaft mit ihm verbunden ist, und wobei die Dicke der Dichtung in der Nähe der Seitenwand des Hohlraums (6) größer ist als die Dicke der Dichtung in der Nähe des Durchgangslochs.

2. Der Zellenhalter (3) nach Anspruch 1, **dadurch gekennzeichnet, dass** an der Oberfläche der Dichtung zusätzliche Dichtlippen (10), insbesondere eine, zwei oder drei Dichtlippen (10), vorhanden sind, wobei die Lippen (10) Teil dieser Dichtung sind.

3. Der Zellenhalter (3) nach Anspruch 1, **dadurch gekennzeichnet, dass** im Bereich der Seitenwand des Hohlraums (6), insbesondere an dem vom Boden entfernten Rand des Hohlraums (6), zusätzliche Vorsprünge vorhanden sind, die in das Material des Zellenhalters (3) integriert und fest mit diesem verbunden sind, wobei diese Vorsprünge aus dem gleichen weichen Material (5) wie die Dichtung hergestellt sind.

4. Der Zellenhalter (3) nach Anspruch 1, **dadurch gekennzeichnet, dass** die Ecke (8) der Dichtung konkav abgerundet ist.

## Revendications

1. Un support de cellules (3), ayant la forme d'une plaque, dans laquelle il y a des cavités cylindriques (6) pour les cellules (2), se terminant par un fond, dans lequel le fond a un trou traversant, décalé de la paroi latérale de la cavité (6), tandis que du côté de la cavité (6) le fond est au moins partiellement recouvert d'un joint d'étanchéité souple, dans lequel le joint est intégré et relié de manière permanente au support de cellules (3), et dans lequel l'épaisseur du joint près de la paroi latérale de la cavité (6) est supérieure à l'épaisseur du joint près du trou traversant.

2. Le support de cellules (3) selon la revendication 1, **caractérisé en ce qu'il** y a des lèvres d'étanchéité supplémentaires (10) sur la surface du joint, en particulier une, deux ou trois lèvres d'étanchéité (10), lesquelles lèvres (10) font partie de ce joint.

3. Le support de cellules (3) selon la revendication 1, **caractérisé en ce que** dans la zone de la paroi latérale de la cavité (6), en particulier au bord de la cavité (6) éloigné du fond, il y a des saillies supplémentaires, intégrées au matériau du support de cellules (3) et reliées de façon permanente à celui-ci, ces saillies étant faites du même matériau souple (5) que le joint d'étanchéité.

4. Le support de cellules (3) selon la revendication 1, **caractérisé en ce que** le coin (8) du joint est arrondi de manière concave.
